# EUROPEAN PATENT APPLICATION

(11) **EP 2 998 538 A1**
(43) Date of publication of application: **23.03.2016**
(21) Application number: 14185580.9
(22) Date of filing: 19.09.2014
(51) Int. Cl.: F02B 19/10, H01T 13/54, F02B 19/08, F02B 19/12, F02B 19/18

(54) **Pre-chamber of internal combustion engine**

(71) Applicant: Caterpillar Motoren GmbH & Co. KG, 24159 Kiel (DE)
(72) Inventor: Sixel, Eike Joachim, 24109 Kiel (DE); Holst, Hauke, 24161 Altenholz (DE)
(74) Representative: Kramer Barske Schmidtchen Patentanwälte PartG mbB

(57) **Abstract**

The present disclosure relates to a pre-chamber body (22) of an internal combustion engine and a related method for operating the internal combustion engine. The pre-chamber body (22) may comprise a pre-chamber (36) defined by an inner pre-chamber face (32), and at least one protrusion (40) extending from the inner pre-chamber face (32) inwards. Thus, it may be possible to generate high turbulences in an ignition region of the pre-chamber (36), which may increase ignitability within the pre-chamber (36).

## Description

### Technical Field

The present disclosure generally relates to an internal combustion engine, and more particularly, to a pre-chamber body of an internal combustion engine, and a related method for operating the internal combustion engine.

### Background

A known problem of operating an internal combustion engine is the generation of harmful nitrogen oxides. Those nitrogen oxides may form during combustion as a result of high peak combustion temperatures. Accordingly, reducing the peak combustion temperatures during combustion may generally reduce the formation of nitrogen oxides. For this reason, lean air fuel mixtures such as lean gaseous fuel air mixtures are used. A lean air fuel mixture has a relatively large air-to-fuel ratio compared to a fuel mixture having stoichiometric air-to-fuel ratio.

Operating an internal combustion engine with a relatively large air-to-fuel ratio (lean mixture) may result in an incomplete combustion within the main combustion chamber due to the relatively slow rate of flame propagation from a single point ignition source, such as a spark plug. Furthermore, a poor ignitability may result from the lean mixture. Particularly, large-bore engines may suffer from those effects.

To improve the ignitability of lean burn gaseous fuel internal combustion engines, the same may be provided with pre-chambers (also referred to as pre-combustion chambers). For example, such a pre-chamber may be fluidly connected to a main combustion chamber of a respective cylinder via a riser passage and, typically, a plurality of flow transfer passages, but at least one. Those flow transfer passages allow flow of a lean mixture of gaseous fuel and air from the main combustion chamber into the pre-chamber during a compression stroke. Enrichment of the lean mixture in the pre-chamber is typically effected by providing a small quantity of gaseous fuel into the pre-chamber via a separate gas feed passage during the intake stroke. The enriched mixture is ignited in the pre-chamber by an igniter such as a spark plug. Ignition of the enriched mixture causes a flame front of hot gases that propagates from the pre-chamber via the flow transfer passages into the main combustion chamber. Thus, the lean mixture in the main combustion chamber ignites and bums, and, thereby, expands against a movable piston that drives a crankshaft.

For example, US Patent 5,024,193 of Caterpillar Inc. discloses a fuel combustion system with a pre-combustion chamber assembly defining a pre-chamber. The pre-chamber has a pre-selected shape and volume. A plurality of ejection passages of pre-selected geometric cross-section is provided for directing and controllably expanding burning gases from the pre-chamber into a main combustion chamber at a velocity greater than speed of sound.

The present disclosure is directed, at least in part, to improving or overcoming one or more aspects of prior systems.

### Summary of the Disclosure

According to an aspect of the present disclosure, a pre-chamber body for an internal combustion engine is disclosed. The pre-chamber body may comprise a pre-chamber defined by an inner pre-chamber face. The pre-chamber may further comprise at least one protrusion extending from the inner pre-chamber face inwards.

According to another aspect of the present disclosure, a gaseous fuel internal combustion engine is disclosed. The gaseous fuel internal combustion engine comprises at least one cylinder equipped with a pre-chamber body as exemplary disclosed herein.

According to yet another aspect of the present disclosure, a method for operating an internal combustion engine including a main combustion chamber is disclosed. The method may comprise supplying a flow of a mixture of fuel and air from the main combustion chamber into a pre-chamber. The method may further comprise generating a swirling motion in the flow. Still further, the method may comprise dividing the swirling flow within the pre-chamber into at least two sub flows, and deflecting the sub flows in the direction of one another to meet in an ignition region of the pre-chamber for generating turbulences in the ignition region. The method may further comprise igniting the mixture in the ignition region.

Other features and aspects of this disclosure will be apparent from the following description and the accompanying drawings.

### Brief Description of the Drawings

The accompanying drawings, which are incorporated herein and constitute a part of the specification, illustrate exemplary embodiments of the disclosure and, together with the description, serve to explain the principles of the disclosure. In the drawings:
Fig. 1 is a schematic drawing of an upper section of an engine cylinder covered by a cylinder head only shown in part as well, the cylinder head comprising a pre-chamber assembly;
Fig. 2 is a schematic drawing of an embodiment of a pre-chamber assembly according to the present disclosure;
Fig. 3 is a sectional view through the pre-chamber assembly of Fig. 2 along line C-C;
Fig. 4 is a sectional view through the pre-chamber assembly of Fig. 2 along line D-D;
Fig. 5 shows a flow of fuel and air in the section of the pre-chamber assembly shown in Fig. 4 during a compression stroke; and
Fig. 6 shows a flow of fuel and air in the section of the pre-chamber assembly shown in Fig. 3 during a compression stroke.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure is based in part on the realization that ignitability within a pre-chamber may be improved by increasing turbulences in the ignition region. Accordingly, it may be also possible to reliably ignite a lean mixture of fuel and air within a pre-chamber without enriching the mixture in the pre-chamber, or at least reducing the enrichment to lower the generation of nitrogen oxides.

Herein, it is proposed to generate high turbulences in an ignition region of the pre-chamber. The high turbulence may be caused by inducing a defined swirl flow in the pre-chamber, separating said defined swirl flow into separate flows and directing those separate flows by defined protrusions in the pre-chamber in direction to one another to meet and clash in the ignition region of the pre-chamber. However, it may be also possible to guide a single defined flow within the pre-chamber via a protrusion in the pre-chamber in direction of a flow obstacle such as a spark plug tip to generate a high turbulence.

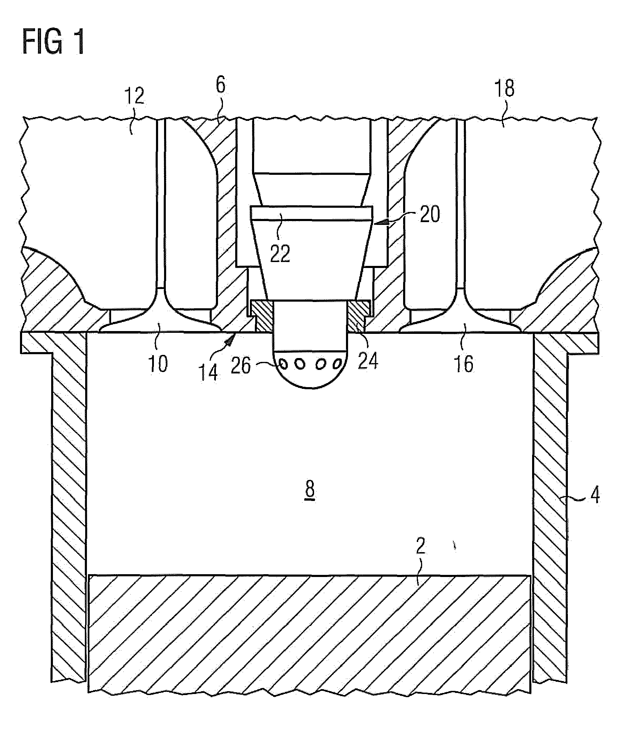

Referring now to the drawings to explain the general principle of the present disclosure by way of example. Fig. 1 depicts a piston 2 arranged in a cylinder 4 of an internal combustion engine (not shown in further detail). Cylinder 4 is covered by a cylinder head 6. Piston 2, cylinder 4, and cylinder head 6 together define a main combustion chamber 8 of the internal combustion engine.

Piston 2 is reciprocatingly arranged in cylinder 4 to move between a top dead center (TDC) and a bottom dead center (BDC) during operation of the internal combustion engine. For the purposes of the present disclosure, the internal combustion engine is considered as a four-stroke internal combustion engine operating at least partly on gaseous fuel such as a gas engine or a dual fuel engine. One skilled in the art will recognize, however, that the internal combustion engine may be any type of engine (turbine, gas, diesel, natural gas, propane, two-stroke, etc.) that would utilize the pre-chamber assembly as disclosed herein. Furthermore, the internal combustion engine may be of any size, with any number of cylinders, and in any configuration (V-type, in-line, radial, etc.). Moreover, the internal combustion engine may be used to power any machine or other device, including locomotive applications, on-highway trucks or vehicles, off-highway trucks or machines, earth moving equipment, generators, aerospace applications, marine applications, pumps, stationary equipment, or other engine powered applications.

Cylinder head 6 includes at least one inlet valve 10, for example a poppet valve. Inlet valve 10 is accommodated in an inlet channel 12 opening in a piston sided face 14 of cylinder head 6 for supplying a lean mixture of gaseous fuel and air into main combustion chamber 8. Similarly, at least one outlet valve 16, for example also a poppet valve, is accommodated in an outlet channel 18 of cylinder head 6 to guide exhaust gas out of main combustion chamber 8.

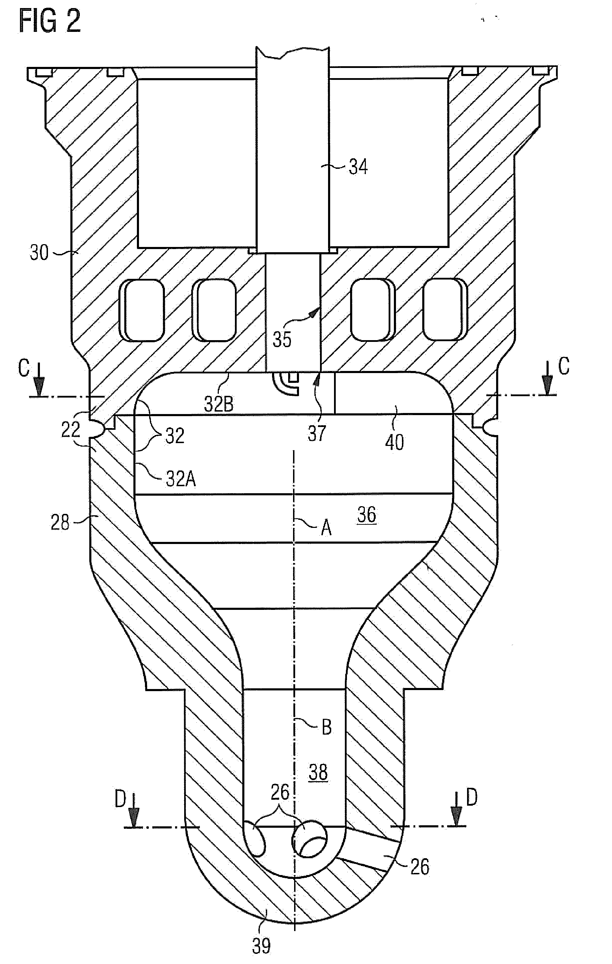

Cylinder head 6 further comprises a pre-chamber assembly 20 including a pre-chamber body 22 as is described in greater detail herein when referring to Fig. 2. A plurality of flow transfer passages 26 fluidly connects a pre-chamber (not visible in Fig. 1) within pre-chamber assembly 20 and main combustion chamber 8 of cylinder 4.

Pre-chamber assembly 20 is installed in cylinder head 6 via a mounting body 24 as shown in Fig. 1. Alternatively, pre-chamber assembly 20 may be installed in cylinder head 6 in any other fashion.

Referring to Fig. 2, an exemplary embodiment of a pre-chamber assembly is shown in a schematic sectional view.

Pre-chamber assembly 20 includes pre-chamber body 22, which is formed of a first or lower body part (pre-chamber top end) 28 and a second or upper body part (pre-chamber support) 30. Furthermore, pre-chamber assembly 20 includes an ignition device 34.

Pre-chamber body 22 includes and defines a pre-chamber 36, a riser passage 38 and flow transfer passages 26.

Specifically, pre-chamber 36 is defined by an inner pre-chamber face 32 of pre-chamber body 22. Said inner pre-chamber face 32 includes a first section 32A formed at first body part 28, and a second section 32B formed at second body part 30. In the shown embodiment, first section 32A is a circumferential face concentrically disposed around a pre-chamber axis A, and second section 32B is a flat end face with a circumferential rounding, the end face being perpendicular to pre-chamber axis A.

Further, pre-chamber 36 extends along pre-chamber axis A, is funnel-shaped and tapers in direction to cylindrically shaped riser passage 38. Alternatively, pre-chamber 36 may have any other shape such as a cylindrical shape, pyramidal shape, conical shape, and combinations thereof. For example, pre-chamber 36 may have a volume within a range between 0.1 % and 10 % of the compression volume of cylinder 4 (see Fig. 1).

A bottom section of pre-chamber 36 smoothly transitions into riser passage 38. Said riser passage 38 longitudinally extends in pre-chamber body 22, and opens with one end in pre-chamber 36. In the shown configuration of Fig. 2, a riser passage axis B of riser passage 38 is aligned with pre-chamber axis A. Alternatively, riser passage axis B may run parallel to pre-chamber axis A, or may confine an angle with pre-chamber axis A.

To fluidly connect a bottom section of riser passage 38 and a top section of main combustion chamber 8 (see Fig. 1), flow transfer passages 26 are provided. Flow transfer passages 26 extend through a tip 39 of pre-chamber body 22 in a curved or straight manner along respective flow passage axes, which may run inclined to a parallel of pre-chamber axis A, for example, within a range from 5° to 90°. Particularly, an angle between respective flow transfer passage axes and a parallel of pre-chamber axis A may be within a range between 60° and 80°.

Further, flow transfer passages 26 transition into riser passage 38 and an outer face of tip 39, respectively, in a step-like fashion. Alternatively, first flow transfer passages 26 may include rounding and/or chamfers at their respective inlets and outlets and inlets.

In some embodiments, flow transfer passages 26 may directly open in pre-chamber 36. In other words, a riser passage between a pre-chamber and flow transfer passages may be omitted.

In the shown embodiment, tip 39 is dome-shapes. Alternatively, tip 39 may be flattened or otherwise curved. In some embodiments, tip 39 may reach into main combustion chamber 8, or may be arranged in a cavity provided in face 14 of cylinder head 6 (see Fig. 1).

An ignition device 34, for example a spark plug, a laser or plasma igniter, an ignition fuel injector, or a glow plug, is installed in pre-chamber assembly 20. Specifically, ignition device 34 is operably connected to pre-chamber 36.

Operably connected as used herein means that ignition device 34 is - depending on its ignition mechanism - configured and arranged to ignite an ignitable mixture in pre-chamber 36. For example, in case ignition device 34 is a spark plug, the same may extend into pre-chamber 36. Specifically, electrodes of the spark plug may reach into pre-chamber 36 such that a spark between those electrodes ignites a mixture in pre-chamber 36. As another example, in case ignition device 34 is a laser igniter, the same may be separated from pre-chamber 36 via a window that is configured to transmit a laser beam from said laser igniter into pre-chamber 36.

In case ignition device 34 is configured as an igniter reaching into pre-chamber 36 (as is exemplary shown in Fig. 2), ignition device 34 is mounted in upper body part 30 of pre-chamber body 22 to extend through an ignition device bore 35. Said bore 35 has a bore opening 37 in face section 32B of inner pre-chamber face 32.

Furthermore, two protrusions 40 (one of which is visible in the sectional view of Fig. 2 only) are disposed in pre-chamber 36. As is described in greater detail later on, protrusions 40 extend from inner pre-chamber face 32 inwards. It is noted that other embodiments may include more or less protrusions.

Specifically, in the shown embodiment, protrusions 40 extend from face section 32B of inner pre-chamber face 32 that defines an upper portion of pre-chamber 36. Additionally or alternatively, protrusion 40 may extend from face section 32A of inner pre-chamber face 32.

In case more than one protrusion 40 is provided, for example, a length of protrusion 40 in a direction of pre-chamber axis A may be within a range between 0.5 % and 35 %, particularly between 5 % and 15 %, of a length of pre-chamber 36 along pre-chamber axis A. Further, a width of protrusion 40 in a direction perpendicular to pre-chamber axis A may be within a range from 0.5 % to 45 %, particularly between 25 % and 35 %, of a width of pre-chamber 36 in a direction perpendicular to pre-chamber axis A. Alternatively, in case only one protrusion 40 extends from inner pre-chamber face 32, said protrusion 40 may have a width in a direction perpendicular to pre-chamber axis A of up to 100 % of a width of pre-chamber 36 in a direction perpendicular to pre-chamber axis A.

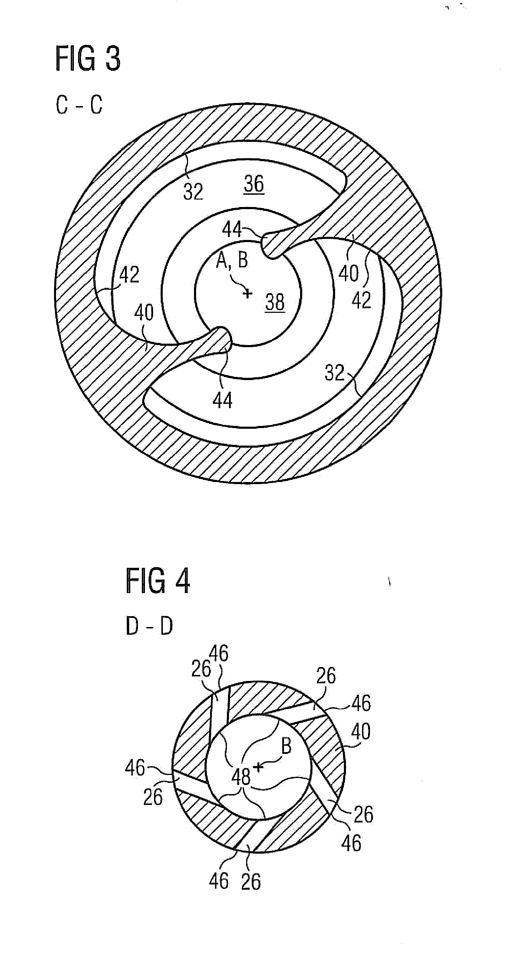

Referring now to Fig. 3, a sectional view through upper body part 30 taken along line C-C shown in Fig. 2 is depicted to illustrate an exemplary configuration of protrusions 40.

As can be seen in Fig. 3, the shown embodiment includes two protrusions 40 extending from inner pre-chamber face 32 inwards to a rounded protrusion tip 44 of respective protrusion 40. In other words, protrusions 40 extend in direction to pre-chamber axis A such that protrusion tips 44 are arranged close to bore opening 37 and a front tip of ignition device 34, respectively (see Fig. 2).

First and second protrusions 40 oppose one another, and are arranged and configured in a discrete rotationally symmetric manner about pre-chamber axis A. Particularly, first and second protrusions 40 are displaced by 180° about pre-chamber axis A. As already noted above, in some embodiments more than two protrusions 40 may be provided. It may be advantageous in those embodiments if the protrusions are also arranged and configured in a discrete rotationally symmetric manner. For example, in case three protrusions are provided, one protrusion may be provided every 120° about pre-chamber axis A around inner pre-chamber face 32.

In the shown configuration, protrusions 40 taper towards respective protrusion tips 44. Moreover, each protrusion includes a curved guiding face 42 smoothly transitioning into inner pre-chamber face 32. As is described in greater detail later on, said configuration may allow to smoothly guide a fluid flow within pre-chamber 36 as desired without generating undesired turbulences in regions near inner pre-chamber face 32. However, in other embodiments, protrusions 40 may have any other shape that allows to guide a swirling fluid flow from inner pre-chamber face 32 along a face of the respective protrusions in a direction to pre-chamber axis A.

Turning to Fig. 4, a further sectional view through pre-chamber body 22 is shown. Specifically, a sectional view through lower body part 28 taken along line D-D shown in Fig. 2 is depicted to illustrate an exemplary configuration of flow transfer passages 26.

In the shown embodiment, five flow transfer passages 26 extend through pre-chamber body 22 between outer openings 46 and inner openings 48. Outer openings 46 are disposed in an outer face of tip 39, whereas inner openings 48 are disposed in an inner face of a bottom section of riser passage 38. However, it is contemplated that other embodiments may include more or less flow transfer passages as desired.

Further, to generate a swirl flow during inflow from main combustion chamber 8 (see Fig. 1) into riser passage 38, flow transfer passages 26 are arranged to extend through pre-chamber body 22 and to enter riser passage 38 in a tangential or almost tangential manner such that flow transfer passage axes of flow transfer passages 26 are tangents or almost tangents to a circle around riser passage axis B (and/or pre-chamber axis A). However, it is contemplated that, in some embodiments, flow transfer passages 26 may not necessarily extend in a tangential or almost tangential manner as described above. Instead, it may be sufficient if flow transfer passages do not extend in a radial manner through tip 39 with respect to riser passage axis B / pre-chamber axis A, but in any other suitable manner such that respective flow transfer passage axes do not intersect with riser passage axis B / pre-chamber axis A.

In other words, flow transfer passage axes 26 may extend through tip 39 of pre-chamber body 22 in a straight manner within a range between almost radial with respect to pre-chamber axis A and tangential with respect to pre-chamber axis A. As an alternative, flow transfer passage axes 26 may extend through tip 39 of pre-chamber body 22 in a curved manner such that flow transfer passages 26 open in riser passage 38 in a direction within a range between almost radial with respect to pre-chamber axis A and tangential with respect to pre-chamber axis A.

In other embodiments, flow transfer passages 26 may be arranged and/or configured in any other fashion that allows to generate a swirling inflow from main combustion chamber 8 (see Fig. 1) into riser passage 38. As further examples, flow transfer passages 26 may be asymmetrically arranged around riser passage axis B, and/or flow cross sections of flow transfer passages 26 may be not equal for all flow transfer passages 26.

### Industrial Applicability

The pre-chamber assembly as generally disclosed herein is applicable in internal combustion engines. Particularly, the pre-chamber assembly is applicable in gaseous fuel internal combustion engines operating on a lean mixture of gaseous fuel and air for reducing the emission of nitrogen oxides and/or improving ignition reliability.

In the following, operation of a gaseous fuel internal combustion engine including pre-chamber assembly 20 is exemplary described with reference to Figs. 1 to 6 to explain functionality of pre-chamber assembly 20 as disclosed herein.

During an intake stroke, inlet valve 10 in cylinder head 6 is opened to allow flow of a lean mixture of gaseous fuel and air from inlet channel 12 into main combustion chamber 8. Simultaneously, piston 2 travels from TDC to BDC of cylinder 4.

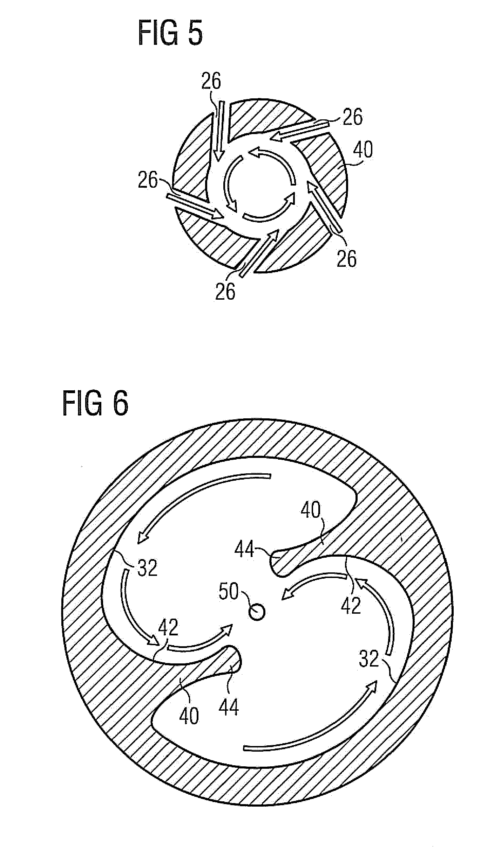

During a compression stroke, piston 2 travels back to TDC, and thereby, pushes a portion of the lean mixture of gaseous fuel and air from the main combustion chamber 8 via flow transfer passages 26 into riser passage 38. Due to the specific arrangement and configuration of flow transfer passages 26, a swirling motion is generated in the lean mixture during inflow into riser passage 38. Said phenomenon is schematically depicted in Fig. 5. As one skilled in the art will appreciate, other configurations and arrangements of flow transfer passages 26 may similarly facilitate to generate a swirling motion in the lean mixture flow during inflow into riser passage 38.

The lean mixture propagates further through riser passage 38, and into pre-chamber 36 while maintaining the swirling motion. In an upper section of pre-chamber 36, the flow is divided into two sub flows by protrusions 40 as schematically illustrated in Fig. 6. Protrusions 40 guide the sub flows via curved faces 42 in direction to one another and to an ignition region 50 of pre-chamber 36 in front of bore opening 37. For example, in case ignition device 34 is configured as a spark plug, said ignition region 50 is disposed around electrodes of spark plug 34.

As a result of the defined deflection caused by protrusions 40, the two sub flows meet and clash in ignition region 50, and thereby, generate high turbulences in ignition region 50. Said high turbulences may allow to ignite even a lean mixture of gaseous fuel and air without separately enriching the same as in conventional pre-chambers.

As stated above, the lean mixture is ignited by ignition device 34 in ignition region 50, for example by generating a spark between electrodes of a spark plug. The ignition causes a flame of hot gases propagating from pre-chamber 36 and via riser passage 38 and flow transfer passages 26 into main combustion chamber 8 to cause the main combustion therein. The ignition energy provided to main combustion chamber 8 is considerably high, because, inter alia, the pressure within pre-chamber 36 raises during combustion. The resulting pressure is higher than in main combustion chamber 8 such that the flame fronts enter main combustion chamber 8 at a high velocity.

It is contemplated that more than two sub flows may be generated in pre-chamber 36 depending on the arrangement, configuration, and number of protrusions 40. For example, three protrusions may be configured to generate three sub flows directed to one another to meet in the ignition region.

However, causing high turbulences in the ignition region to increase the ignitability of the lean mixture of fuel and air may be also achieved by a single protrusion that is arranged and configured to provide a flow obstacle for the swirling flow in the ignition region, for example by a widened, roughed and/or otherwise turbulence generating design of tip 44. Alternatively, it may be also possible to provide a single protrusion that directs the flow directly onto a tip of the ignition device to generate high turbulences when the flow hits the ignition device tip.

As outlined herein, the pre-chamber body configuration as disclosed herein allows to reliably combust a lean mixture of gaseous fuel and air in the main combustion chamber while generating merely a small amount of nitrogen oxides in the pre-chamber, since the pre-chamber may be not enriched by providing a separate fuel into the pre-chamber. For example, the disclosed pre-chamber assembly may allow to reliably combust a lean mixture in main combustion chamber 8, the lean mixture having an air-to-fuel equivalence ratio (lambda) being higher than 1.6, particularly within a range between 1.7 and 2.2. Lambda (λ) is a ratio of actual air-to-fuel ratio (AFR) to stoichiometry AFR for a given mixture. For example, λ= 1.0 is at stoichiometry, rich mixtures have a λ < 1.0, and lean mixtures have a λ > 1.0.

Further, although the pre-chamber body as disclosed herein may allow to omit a separate fuel supply channel that opens in the pre-chamber to supply a fuel for enriching the lean mixture in the pre-chamber, such a separate fuel supply channel may be still provided, but may supply less fuel compared to conventional pre-chambers without high turbulences in the ignition region. As a result, the mixture in the pre-chamber is less enriched which may result in a reduced generation of nitrogen oxides.

Although the preferred embodiments of this invention have been described herein, improvements and modifications may be incorporated without departing from the scope of the following claims.

## Claims

1. A pre-chamber body (22) for an internal combustion engine, the pre-chamber body (22) comprising:
a pre-chamber (36) defined by an inner pre-chamber face (32); and
at least one protrusion (40) extending from the inner pre-chamber face (32) inwards.

2. The pre-chamber body (22) of claim 1, wherein the pre-chamber (36) includes a pre-chamber axis (A), and the at least one protrusion (40) is configured to guide a fluid flow within the pre-chamber (36) towards the pre-chamber axis (A).

3. The pre-chamber body (22) of claim 1 or 2, comprising a first protrusion (40) and a second protrusion (40) opposing the first protrusion (40), wherein the first protrusion (40) and the second protrusion (40) are configured to divide a fluid flow within the pre-chamber (36) into two sub flows, and to direct the two sub flows in direction to one another.

4. The pre-chamber body (22) of any one of the preceding claims, further comprising an ignition device bore (35) for mounting an ignition device (34), the ignition device bore (35) extending through the pre-chamber body (22) to a bore opening (37) in the inner pre-chamber face (32), and
the at least one protrusion (40) is configured to guide a fluid flow within the pre-chamber (36) to a region in front of the bore opening (37).

5. The pre-chamber body (22) of any one of the preceding claims, wherein the at least one protrusion (40) includes a curved face (42) smoothly transitioning into the inner pre-chamber face (32).

6. The pre-chamber body (22) of any one of the preceding claims, wherein the at least one protrusion (40) includes a protrusion tip (44), and the at least one protrusion (40) at least partially tapers in direction to the protrusion tip (44).

7. The pre-chamber body (22) of any one of the preceding claims, wherein the pre-chamber (36) comprises a pre-chamber axis (A), and a plurality of protrusions (40) is disposed symmetrically around the pre-chamber axis (A).

8. The pre-chamber body (22) of any one of the preceding claims, further comprising a plurality of flow transfer passages (26) extending through the pre-chamber body (22) and fluidly connecting the pre-chamber (36) with the outside, the flow transfer passages (26) being arranged and/or configured such that a flow from the outside enters the pre-chamber (36) in a swirling motion.

9. The pre-chamber body (22) of claim 8, wherein:
the pre-chamber (36) includes a pre-chamber axis (A); and
the flow transfer passages (26) extend through the pre-chamber body (22) in a straight manner within a range between almost radial with respect to the pre-chamber axis (A) and tangential with respect to the pre-chamber axis (A), or in a curved manner such that the flow transfer passages (26) open within the pre-chamber body (22) in a direction within a range between almost radial with respect to the pre-chamber axis (A) and tangential with respect to the pre-chamber axis (A).

10. The pre-chamber body (22) of any one of the preceding claims, further comprising a riser passage (38) fluidly connecting the pre-chamber (36) and the plurality of flow transfer passages (26).

11. The pre-chamber body (22) of any one of the preceding claims, further comprising a fuel supply channel extending through the pre-chamber body (22) and opening in the pre-chamber (36).

12. A gaseous fuel internal combustion engine comprising at least one cylinder (4) equipped with a pre-chamber body (22) according to any one of the preceding claims.

13. A method for operating an internal combustion engine including a main combustion chamber (8), the method comprising:
supplying a flow of a mixture of fuel and air from the main combustion chamber (8) into a pre-chamber (36);
generating a swirling motion in the flow;
dividing the swirling flow within the pre-chamber into at least two sub flows, and deflecting the sub flows in the direction of one another to meet in an ignition region of the pre-chamber for generating turbulences in the ignition region; and
igniting the mixture in the ignition region.

14. The method of claim 13, wherein the step of supplying a flow of a mixture of fuel and air into a pre-chamber (36) comprises supplying a flow of a lean mixture of gaseous fuel and air.

15. The method of claim 13 or 14, further comprising providing a fuel directly into the pre-chamber (36) to mix with the lean mixture.
